# EUROPEAN PATENT APPLICATION

(11) **EP 0 635 775 A1**
(43) Date of publication of application: **25.01.1995**
(21) Application number: 94305134.2
(22) Date of filing: 13.07.1994
(51) Int. Cl.: G06F 1/16

(54) **Removal prevention for detachable unit**

(30) Priority: 23.07.1993 JP 182972/93
(71) Applicant: International Business Machines Corporation, Armonk, N.Y. 10504 (US)
(72) Inventor: Uchiyama, Yoshiharu, Isehara-shi, Kanagawa-ken (JP); Katoh, Katsutoshi, Tokyo-to (JP); Suzuki, Michio, Yokohama-shi, Kanagawa-ken (JP); Yonemochi, Kenshin, Kamakura-shi, Kanagawa-ken (JP)
(74) Representative: Davies, Simon Robert

(57) **Abstract**

To provide an information processing apparatus in which arbitrary removal of a device for processing information accommodated within a main body can be prevented, regardless of operation of an eject button or the like, and to provide an information processing apparatus in which such prevention can be realized in a simple structure and at a low cost.

A card insertion portion 80 accommodates PCMCIA cards 84. An engaging member 88 is provided so as to be freely installable and removable from the card insertion portion 80. In an installed state, the engaging member 88 corresponds to the PCMCIA cards 84 so as to prevent removal of the PCMCIA cards 84. The engaging member 88 is covered by a keyboard 22 when the keyboard 22 is closed. By selectively using the engaging member 88 and closing the keyboard 22, the engaging member 88 is prevented from being removed. Accordingly, the PCMCIA cards 84 are prevented from being removed from the card insertion portion 80. A single engaging member 88 can prevent removal of the PCMCIA cards 84, regardless of operation of eject buttons 86. An information processing apparatus, which can realize such prevention in a simple structure and at a low cost, is thereby obtained.

## Description

The present invention relates to information processing apparatus, and more particularly to an information processing apparatus in which a device for processing information is accommodated within a main body so as to be installable and removable.

In an information processing apparatus, e.g., a portable information processing apparatus, a hard disk drive (HDD), a floppy disk drive (FDD), a battery or the like can be formed as a cartridge type package. This type of package, which is accommodated within the main body so as to be installable and removable, is widely used. In addition, an installable and removable type of thin card, e.g., a ROM card, may be used.

In this type of information processing apparatus, a user can install and remove the aforementioned HDD package, ROM card or the like. Accordingly, by replacing the HDD package, the ROM card or the like with an HDD package, a ROM card or the like storing different information, an information processing apparatus can be made to accommodate more functions. Further, communication between personal computers is possible if a communication card such as a modem card is used. Further, because various packages and cards can be installed and removed, maintenance of the data processor is facilitated.

The HDD package, the ROM card and the like are very expensive and information stored therein must be protected. Therefore, it is necessary to prevent arbitrary removal (such as theft) of the HDD package, the ROM card and the like from the main body.

In particular, the aforementioned ROM card or the like which is installable and removable can be easily removed from the main body by operation of an eject button. Therefore, it is necessary to have a mechanism which can prevent removal of such devices from the main body, regardless of the operation of the eject button.

For a device such as a ROM card or the like accommodated within the main body, a security mechanism formed by a cover or the like which completely covers an opening for inserting a card can be prevented. In this case, the security mechanism is complicated and expensive, and the processor as a whole becomes large as space for the security mechanism must be provided. Further, if a modem card or the like equipped with a communication cable is used, the opening for inserting the card cannot be completely covered, and the problem of undesired removal of the device remains unsolved. As a result, a simple security mechanism has been desired for devices such as a ROM card or an HDD package.

In view of the facts set forth above, it is an object of the present invention to provide an information processing apparatus which can prevent arbitrary removal, from a main body of the processor, of a device for processing information accommodated within the main body, regardless of operation of an eject button or the like. It is also an object of the present invention to provide an information processing apparatus in which such prevention of arbitrary removal can be realized by a simple structure and at a low cost.

Accordingly, the present invention provides an information processing apparatus comprising: a main body in which a device for processing information is accommodated so as to be installable and removable via an opening; a preventing member freely mountable to and removable from said main body, said preventing member preventing said device from being removed from said opening for a device when said preventing member is mounted to said main body; and means for preventing removal of said preventing member from said main body.

The present invention also provides an information processing apparatus wherein said preventing member removal preventing means has: a cover mounted to said main body so as to be freely opened and closed, said cover preventing removal of said preventing member from said main body when said cover is closed; and a movable member mounted to said main body, said movable member being movable between a state in which said movable member protrudes from the exterior of said main body and a state in which said movable member is withdrawn into said main body, and in the state in which said movable member is exposed to the exterior from said main body, said movable member prevents the opening of said cover.

In the information processing apparatus, a device for processing information is inserted from an opening for a device of a main body so as to be accommodated within the main body.

When the device is accommodated into the opening for the device of the main body, a preventing member is mounted to the main body so as to co-operate with the device accommodated in the opening for the device. The device is thereby prevented from being removed from the exterior. Further, a preventing member removal preventing means prevents the removal of the preventing member from the exterior.

In this way, by selectively using the preventing member, the device accommodated in the opening for the device of the main body can be prevented from being removed. In addition, even if a plurality of devices are inserted into the opening for the device so as to be accommodated within the main body, a single preventing member can prevent the respective devices from being arbitrarily removed from the main body. Such prevention can be realized in a simple structure and at a low cost.

In the information processing apparatus, a device for processing information is inserted into an opening for a device in a main body so as to be accommodated therein.

When the device is accommodated in the opening for the device of the main body, the preventing member is mounted to the main body so as to co-operate with the device accommodated in the opening for the device. Accordingly, the device is prevented from being removed from the exterior. Further, the preventing member is prevented from being removed from the exterior when a cover is closed. Moreover, when a movable member is moved while the cover is closed, the movable member engages with the cover so as to prevent the cover from opening. In other words, the preventing member prevents removal from the exterior of a device accommodated in the opening for the device of the main body. The cover prevents the preventing member from being removed from the exterior. Further, the movable member maintains the closed state of the cover and prevents the cover from being opened.

Consequently, when the movable member which maintains the closed state of the cover is locked by an appropriate chain, key or the like, movement of the movable member, i.e., opening of the cover, is reliably prevented. Arbitrary removal of the device accommodated in the opening for the device is also thereby prevented.

In this way, arbitrary removal of the device accommodated in the opening for the device of the main body can be prevented by selective use of the preventing member. In addition, when a plurality of devices are inserted into the opening for the device and are accommodated within the main body, a single preventing member can prevent the respective devices from being arbitrarily removed from the main body. Such prevention can be realized using a simple structure and at a low cost.

In the information processing apparatus, a device for processing information is inserted into an opening at an upper portion of a main body so as to be accommodated within the main body. The device is covered when a cover is closed. A device for processing information may also be inserted into an opening at a side portion of the main body so as to be accommodated therein.

When a device is accommodated in the side portion of the main body, the preventing member is mounted to the main body so as to co-operate with the device so accommodated in the opening at the side portion of the main body. The device is thereby prevented from being removed from the exterior. Further, when the cover is closed in a state in which the preventing member is mounted, the preventing member is covered by the cover and is prevented from being removed from the exterior.

Further, when the movable member provided at the main body is moved in a state in which the cover is closed, the movable member engages with the cover so as to prevent the cover from being opened. In other words, the preventing member mounted to the main body and the device accommodated within the main body are reliably covered by the cover which is maintained in a closed state. Removal of the preventing member and the device from the exterior is thereby prevented. Consequently, when the movable member, which maintains the closed state of the cover, is locked by an appropriate chain, key or the like, movement of the movable member, i.e., opening of the cover, and removal of the preventing member are reliably prevented. As a result, the device inserted into the upper portion opening so as to be accommodated within the main body as well as the device accommodated from the side portion opening of the main body can be prevented from being arbitrarily removed from the main body.

In this way, a device accommodated from the side portion opening of the main body can be prevented from being arbitrarily removed from the main body by selective use of the preventing member. Such prevention can be realized using a simple structure and at a low cost. In addition, even when a plurality of devices are accommodated within the main body, a single movable member provided at the main body can prevent the respective devices from being arbitrarily removed from the main body.

An embodiment of the present invention will now be described, by way of examply only, with reference to the accompanying drawings in which:

Figure 1 shows a perspective view showing a structure of an preventing member and peripheral parts of a personal computer relating to an embodiment of the present invention.

Figure 2 shows a perspective view showing a state in which a keyboard of the personal computer relating to the embodiment of the present invention is opened.

Figure 3 shows a perspective view showing a state in which the keyboard of the personal computer relating to the embodiment of the present invention is in the midst of being opened.

Figure 4 shows a perspective view showing a state in which the keyboard of the personal computer relating to the embodiment of the present invention is closed and the personal computer is used.

Figure 5 shows a perspective view showing a state in which a cover of the personal computer relating to the embodiment of the present invention is closed and the personal computer is not being used.

Figure 6 shows a cross-sectional view taken along line 6-6 of Fig. 2 and showing a state in which the keyboard of the personal computer relating to the embodiment of the present invention is opened.

Figure 7 shows a cross-sectional view taken along line 7-7 of Fig. 3 and showing a state in which the keyboard of the personal computer relating to the embodiment of the present invention is in the midst of being opened.

Figure 8 shows a cross-sectional view taken along line 8-8 of Fig. 4 and showing a state in which the keyboard of the personal computer relating to the embodiment of the present invention is closed and the personal computer is used.

Figure 9 shows a perspective view showing a structure of a movable member and peripheral parts of the personal computer relating to the embodiment of the present invention.

Figure 10 shows a cross-sectional view taken along line 10-10 of Fig. 9 and showing the structure of the movable member and the peripheral parts of the personal computer relating to the embodiment of the present invention.

Figure 11 shows a perspective view seen from the partially broken reverse surface and showing a state in which an engaging projection of the keyboard is engaged with the movable member of the personal computer relating to the embodiment of the present invention.

Figure 12 shows a perspective view showing an HDD pack of the personal computer relating to the embodiment of the present invention as a unit.

Figure 13 shows an exploded perspective view of the HDD pack shown in Fig. 12.

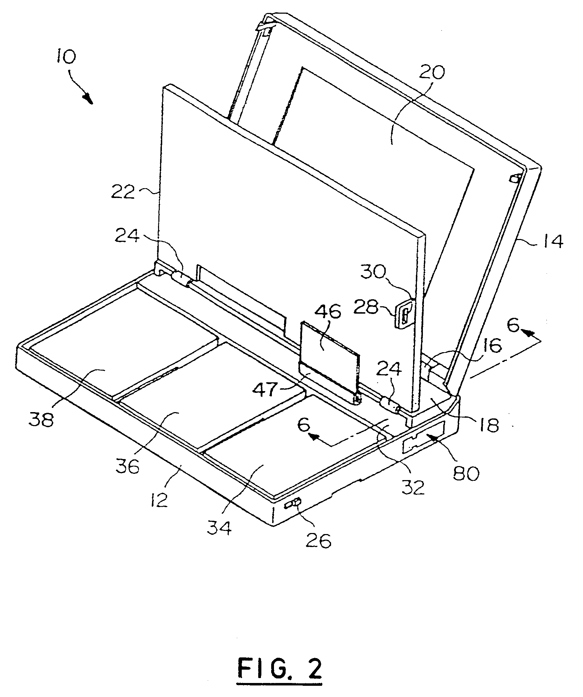

Perspective views of an exterior of a notebook-type personal computer 10 relating to an embodiment of the present invention are shown in Figs. 2-5.

The personal computer 10 includes a thin (shallow bottom) box-shaped main body 12 whose upper portion is open, and a cover 14 provided which can be opened and closed with respect to the main body 12.

In the same way as the main body 12, the cover 14 is formed in a thin (shallow bottom) box-shape. A pair of projections 16, which are each formed in a cylindrical shape, are integrally formed with the cover 14 at the lower end portion of the cover 14. The pair of projections 16 is axially supported at the rear side end portion of a supporting plate 18, which is provided at the rear side end portion of the main body 12 at a predetermined width. As a result, the cover 14 can pivot around the pair of projections 16 so as to freely open and close the main body 12. In addition, a display panel 20 is provided at a center of an open side, i.e. the reverse surface side, of the cover 14.

A partition wall 32 is provided at the rear side of the main body 12. The partition wall 32 is formed by bending a thin metal plate into a predetermined shape. An unillustrated system main body is provided within the partition wall 32. A connector for an HDD pack, a terminal for a battery pack, a connector for an FDD pack (all unillustrated) and the like are or can be provided at the front side end portion of the partition wall 32.

In addition, a keyboard 22 is attached to the front side end portion of the supporting plate 18 of the main body 12. The keyboard 22 serves as a cover. A pair of projections 24, which are each formed in a tongue-shape, are integrally formed with the keyboard 22 at the rear side end portion of the keyboard 22. The pair of projections 24 are axially supported at the front side end portion of the supporting plate 18. As a result, the keyboard 22 can rotate around the pair of projections 24 so as to freely open and close the opening at the upper portion of the main body 12. When the opening of the upper portion of the main body 12 is closed by the keyboard 22, the interior of the main body 12 is covered by the keyboard 22.

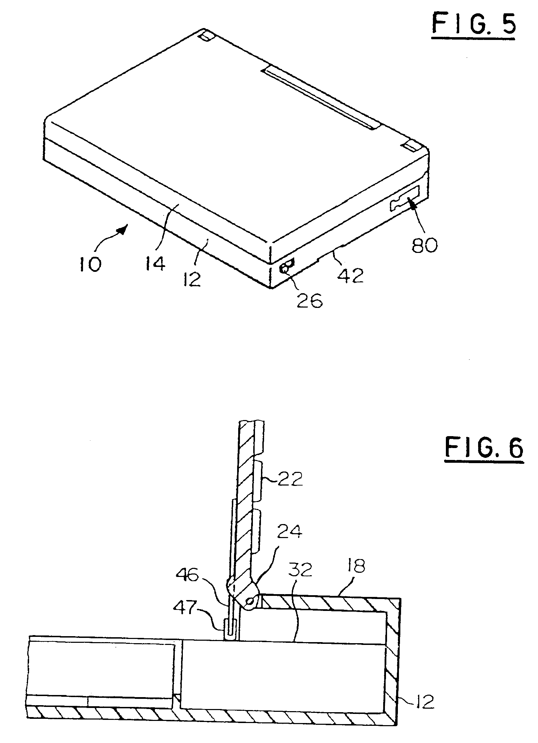

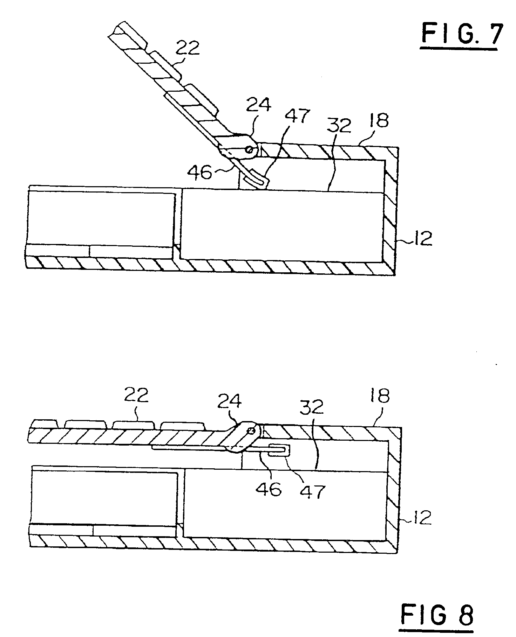

As shown in Figs. 6-8, a holding member 46 is provided at the reverse surface side of the keyboard 22. The holding member 46 is secured in the vicinity of one of the projections 24. The holding member 46 is formed in a rectangular shape by a thin plate of flexible metal (e.g., steel). One end portion of the holding member 46 is secured to the reverse surface side of the keyboard 22. A resin sliding portion 47 is secured to the other end portion (the tip end portion) of the holding member 46 so as to engage the partition wall 32 directly below the holding member 46. The holding member 46 always moves with the keyboard 22 because it is secured to the keyboard 22. The tip end portion of the holding member 46 (the sliding portion 47) can be engaged with the partition wall 32. In the state in which the keyboard 22 is closed (the state shown in Fig. 8), the holding member 46 (the sliding portion 47) is spaced apart from the partition wall 32 . As the keyboard 22 is gradually opened, the sliding portion 47 comes into contact with the partition wall 32 such that the holding member 46 (the state shown in Fig. 7) is elastically deformed. In the state in which the keyboard 22 is opened (the state shown in Fig. 6), the dimensions of each portion are set so that the holding member 46 (the sliding portion 47) vertically engages with the partition wall 32. Accordingly, the holding member 46 can hold the keyboard 22 in a state in which the keyboard 22 is opened and substantially stands upright (the state shown in Fig. 6).

The opening and closing operations of the cover 14 with respect to the above-described main body 12 and the opening and closing operations of the keyboard 22 with respect to the main body 12 are effected by operating an opening/closing operating portion 26 (a two-step operation) provided on a side portion of the main body 12.

Further, an engaging projection 28 is provided at one end portion of the reverse surface side of the keyboard 22. The engaging projection 28 is formed integrally with the keyboard 22 so as to project toward the bottom wall of the main body 12. An engaging hole 30 is formed in the engaging projection 28 and an edge of the engaging hole 30 can be engaged with a movable member 62. A description of the movable member 62 is given in the following paragraphs.

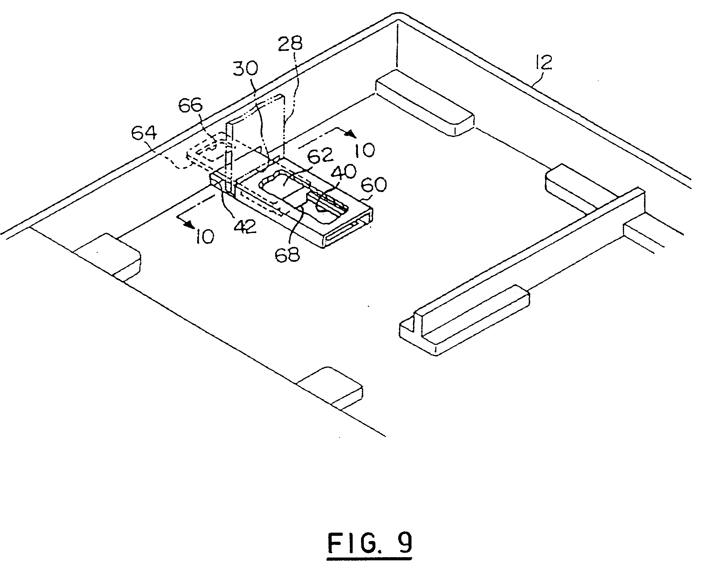

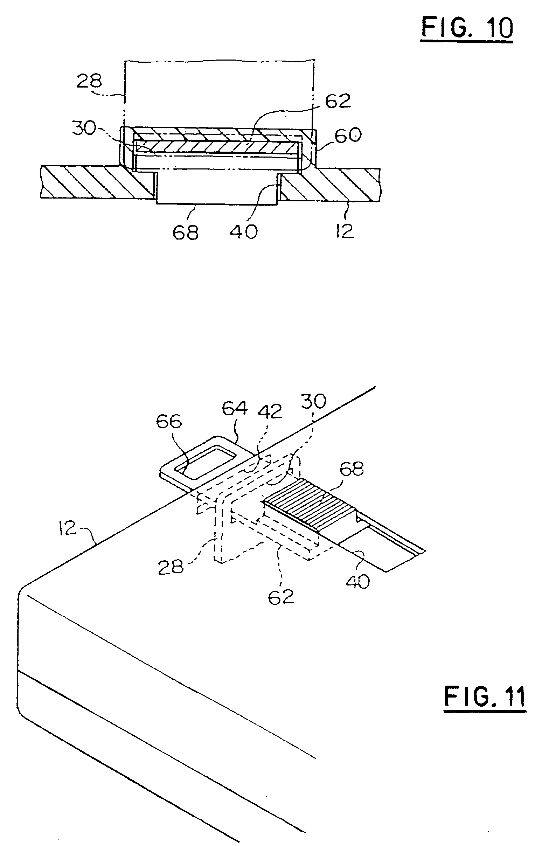

As illustrated in Figs. 9-11 in detail, a guide 60 is provided at one end portion of the bottom wall of the main body 12. The guide 60 is formed in an oblate rectangular shape and has a substantially U-shaped cross-section. The movable member 62 is slidably located in the guide 60. Moreover, a through-hole 40 is formed at the bottom wall of the main body 12 so as to accommodate the guide 60. A through-hole 42 is formed at a side wall of the main body 12 so as to align with the guide 60 (the movable member 62). A tip end engaging portion 64 of the movable member 62 projects to the exterior from a side wall (the through-hole 42) of the main body 12 due to the sliding of the movable member 62 along the guide 60. In addition, a locking hole 66 is formed at the tip end engaging portion 64 of the movable member 62. Further, an operating projecting portion 68 is formed at the reverse surface side of the movable member 62. The operating projecting portion 68 projects further outwardly from the guide 60 and the through-hole 40. The operating projecting portion 68 is used to operate the movable member 62 and can be operated from the exterior of the main body 12 (the bottom wall).

The tip end engaging portion 64 of the movable member 62 cooperates with the engaging projection 28 (the engaging hole 30) of the keyboard 22. The tip end engaging portion 64 can fit into the engaging hole 30 of the engaging projection 28 due to the sliding of the movable member 62 along the guide 60 when the keyboard 22 is closed.

An HDD pack 34, a battery pack 36 and an FDD pack 38, which serve as devices for processing information, can be respectively installed in the main body 12. The HDD pack 34, the battery pack 36 and the FDD pack 38 are freely installable to and removable from the main body 12. They are respectively connected to the previously-described connectors provided within the main body 12 when they are installed to the main body 12.

A description will be now given of the structure of the HDD pack 34.

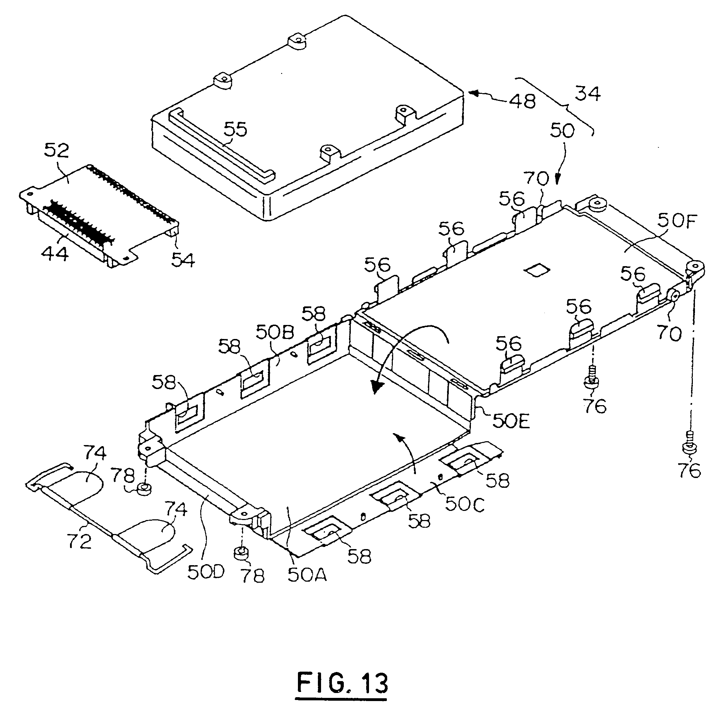

As shown in Figs. 12 and 13, the HDD pack 34 includes an HDD main body 48 and an accommodating case 50.

A flexible substrate 52 is mounted to the HDD main body 48. The flexible substrate 52 is formed of a resin material and is formed into a rectangular, flat plate shape. A connector 54 for the HDD main body is mounted to one end portion of the flexible substrate 52. A connector 44 for the system main body is mounted to the other end portion of the flexible substrate 52. The connector 54 for the HDD main body is connected to a connector 55 which is disposed on the front end portion of the upper surface of the HDD main body 48.

On the other hand, the accommodating case 50 is formed of a resin material and is formed into a predetermined shape. The accommodating case 50 is formed by a bottom wall 50A, a pair of side walls 50B, 50C, a front end wall 50D, a rear end wall 50E, and a top wall 50F. The one side wall 50B, the front end wall 50D and the rear end wall 50E do not pivot with respect to the bottom wall 50A. The other side wall 50C, the top wall 50F can pivot with respect to the bottom wall 50A due to resin hinges. A plurality of vertically projecting pawls 56 are formed at both end portions of the top wall 50F. A plurality of rectangular openings 58 are formed at the pair of side walls 50B, 50C so as to co-operate with the plurality of pawls 56. Mutually engageable pawls (reference numerals are omitted) are formed at the front and the rear end portions of the side wall 50C, and are also formed at the respective end portions of the front end wall 50D and the rear end wall 50E.

A pair of supporting projections 70 is provided at the respective sides of the front end portion of the top wall 50F of the accommodating case 50. The pair of supporting projections 70, each having a small hole formed in the axially central portion thereof, are formed coaxially at the front end portion of the top wall 50F of the accommodating case 50. A wire 72 is engaged with the supporting projections 70. A pair of tapes 74 is adhered to the wire 72.

In accordance with the following steps, the HDD pack 34 having the above-described structure can be formed as a unit by accommodating the HDD main body 48 within the accommodating case 50. First, the HDD main body 48 is set on the bottom wall 50A of the accommodating case 50. At this time, the connector 54 for the HDD main body of the flexible substrate 52 are already connected to the connector 55 of the HDD main body 48. When the HDD main body 48 is set on the bottom wall 50A, a portion of the flexible substrate 52 in a vicinity of the connector 54 is bent down and an intermediate portion of the flexible substrate 52 is bent up 180 degrees so that the bent-down portion and the bent-up portion of the flexible substrate 52 contact each other. Thereafter, a portion of the flexible substrate 52 in the vicinity of the connector 44 for the system main body is bent 90 degrees. As a result, the connector 54 for the HDD main body is directed toward the rear end wall 50E, while the connector 44 for the system main body is directed toward the bottom wall 50A. (The connector 54 and the connector 44 are orthogonal to each other.) Next, the side wall 50C is folded so as to engage with the front end wall 50D and the rear end wall 50E. Then, the top wall 50F is folded so that the pawls 56 engage with the openings 58. Thereafter, the top wall 50F is screwed to the front end wall 50D by screws 76 and nuts 78 when both sides of the connector 44 for the system main body on the flexible substrate 52 are held. Finally, both end portions of the wire 72 are elastically deformed so as to engage with supporting projections 70 of the side walls 50B, 50C. Accordingly, the HDD pack 34 includes the highly-precise HDD main body 48, which is protected by the accommodating case 50 formed by a single resin part (see Fig. 12).

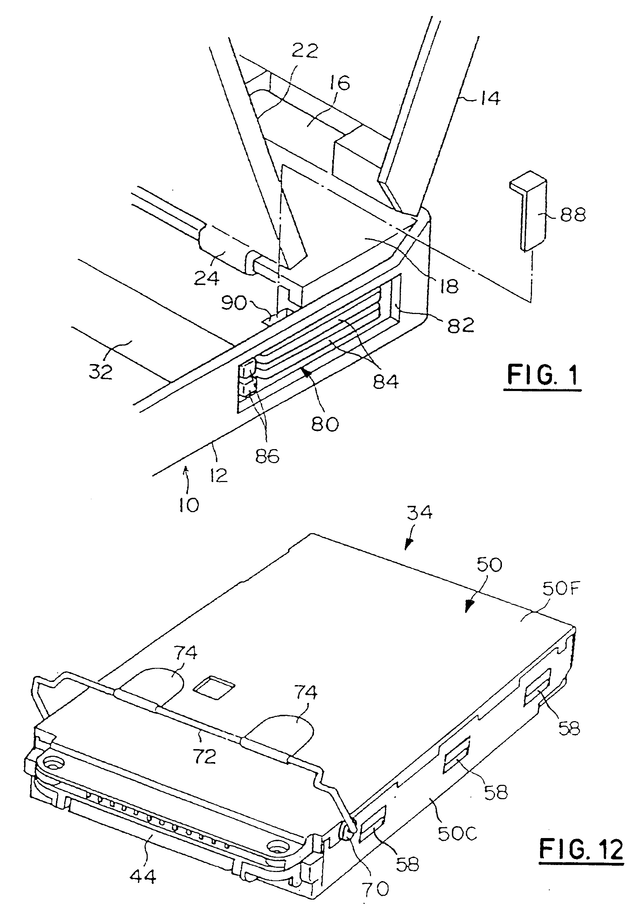

As shown in Fig. 1, a two-storied card insertion portion 80 is provided at a rear side of a portion which accommodates the HDD pack 34 of the main body 12 (the rear side of the partition wall 32). A PCMCIA card 84, which serves as a device for processing information, can be inserted from a side portion of the main body 12 (an insertion opening 82, which is provided at the side wall and serves as an opening for a device). The PCMCIA card 84 has connecting functions with a modem and external devices as well as other various functions. An eject button 86 is provided for each story of the two-storied card insertion portion 80. The PCMCIA card 84 can be removed from the card insertion portion 80 by operating the eject button 86.

In addition, a preventing member 88 is provided at the card insertion portion 80 so as to be freely mountable and removable. The preventing member 88 is substantially L-shaped and can be mounted to a mounting hole 90 member provided at a peripheral portion of the opening at the upper portion of the main body 12. The mounting hole 90 corresponds to a card insertion portion 80. The preventing member 88 can be located across the insertion opening 82 of the card insertion portion 80 by inserting it into the mounting hole 90. The preventing member 88 engages with the PCMCIA card 84 within the card insertion portion 80 so as to prevent the removal of the PCMCIA card 84. Further, the preventing member 88 (the mounting hole 90) co-operates with to an end portion of the keyboard 22 when the keyboard 22 is closed. When the keyboard 22 is closed in a state and the preventing member 88 is mounted in the mounting hole 90, the preventing member 88 is covered by the keyboard 22 and cannot be removed from the exterior.

A description will now be given of the operation of the present embodiment in a case in which the PCMCIA card 84 and either the HDD pack 34 or the FDD pack 38, which are freely installable and removable, are installed in the personal computer 10.

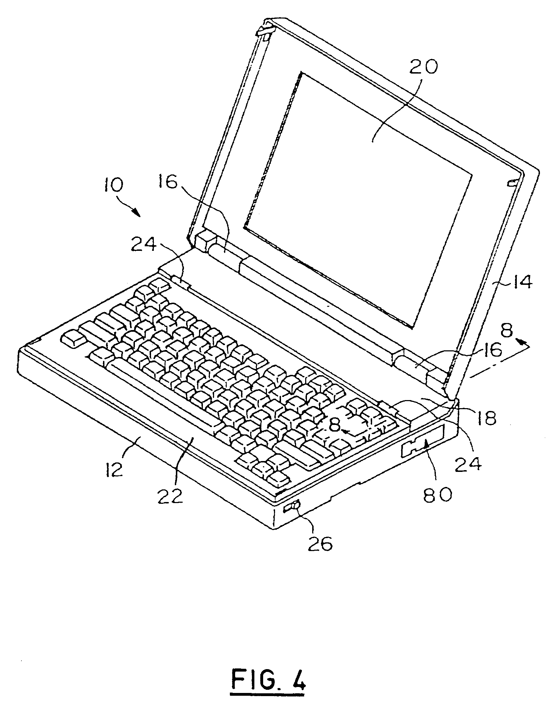

As shown in Fig. 5, a personal computer 10 is in a state in which the cover 14 is closed and the personal computer 10 is not used. First, the opening/closing operating portion 26 is operated using only one of the two steps. Accordingly, the engaged state between the main body 12 and the cover 14 of the personal computer 10, which is in a state of non-use, is released. Next, the cover 14 is pivoted around the pair of projections 16 in the direction moving away from the main body 12 so as to be opened (the state shown in Fig. 4). As shown in Fig. 8, when the cover 14 is opened, the holding member 46 (the sliding portion 47) secured to the keyboard 22 is spaced apart from the partition wall 32.

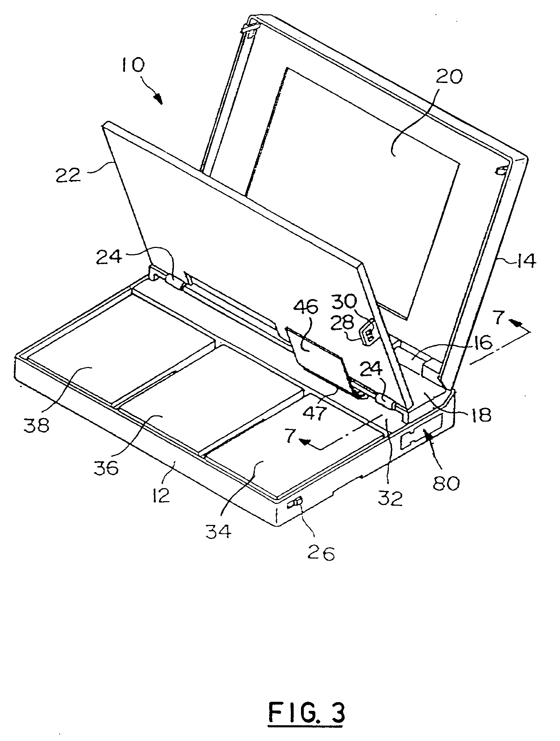

Next, the second step operation of the opening/closing operating portion 26 is effected. Accordingly, the engaged state between the main body 12 and the keyboard 22 is released. Then, the keyboard 22 is pivoted around the pair of projections 24 in a direction moving away from the main body 12 so as to be opened. As the keyboard 22 is gradually opened, the sliding portion 47 comes into contact with the partition wall 32 as shown in Fig. 7, and the holding member 46 elastically deforms (the state shown in Fig. 3). Further, when the keyboard 22 is opened so as to be set substantially upright (the state shown in Fig. 2), the holding member 46 (the sliding portion 47) vertically engages the partition wall 32 as shown in Fig. 6. As a result, the keyboard 22 is held by the holding member 46 in the state in which the keyboard 22 is opened and stands substantially upright (the state shown in Fig. 2). The keyboard 22 is prevented from being accidentally moved in a closing direction, and the interior of the main body 12 is exposed.

Therefore, when a device such as an HDD pack 34 or an FDD pack 38 accommodated within the main body 12 is installed to and removed (replaced) from the main body 12, the keyboard 22 does not hamper operations for installing and removing the device.

Next, the HDD pack 34, the FDD pack 38 and the like are inserted from the opening at the upper portion of the main body 12 so as to be accommodated within the main body 12. Thereafter, the keyboard 22 is pivoted around the pair of projections 24 in a direction of approaching the main body 12, which is opposite to the previously-described direction. The keyboard 22 is thereby closed. As a result, the personal computer 10 is again set in the state shown in Fig. 4. The HDD pack 34, the FDD pack 38 and the like accommodated within the main body 12 are covered by the keyboard 22.

The PCMCIA card 84 is inserted from a side portion of the main body 12 (the insertion opening 82) and accommodated within the card insertion portion 80.

When the PCMCIA card 84 is accommodated within the card insertion portion 80, the preventing member 88 is inserted in the mounting hole 90 so as to be mounted to the main body 12 before the keyboard 22 is closed as shown in Fig. 4. Consequently, the preventing member 88 is located across the insertion opening 82 of the card insertion portion 80. The preventing member 88 engages with the PCMCIA card 84 within the card insertion portion 80 so as to prevent the PCMCIA card 84 from being removed from the exterior, regardless of operation of the eject button 86. Further, when the keyboard 22 is closed in a state in which the preventing member 88 is mounted, the preventing member 88 is covered by the keyboard 22 so as to prevent the removal thereof from the exterior.

Moreover, when the keyboard 22 is closed in this way, the movable member 62 provided within the main body 12 slides along the guide 60 due to operation of the operating projecting portion 68 of the movable member 62. As shown in Fig. 11, the tip end engaging portion 64 fits into the engaging hole 30 of the engaging projection 28 and the locking hole 66 is exposed outside the main body 12. As a result, the keyboard 22 is prevented from being opened.

In other words, the devices such as the HDD pack 34 and the FDD pack 38 accommodated within the main body 12 and the preventing member 88 mounted to the main body 12 are reliably covered by the keyboard 22 which is maintained in a closed state by the movable member 62. The devices and the engaging member 88 are thereby prevented from being removed from the exterior. The locking hole 66 (a portion exposed to the exterior) of the tip end engaging portion 64 of the movable member 62, which maintains the keyboard 22 in a closed state, is locked by an appropriate chain, key or the like. Accordingly, movement of the movable member 62, that is, opening of the keyboard 22, and removal of the preventing member 88 are reliably prevented. As a result, the HDD pack 34 or the FDD pack 38 accommodated within the main body 12 as well as the PCMCIA card 84 accommodated within the card insertion portion 80 can be prevented from being arbitrarily removed.

According to the personal computer 10 relating to the present embodiment, the PCMCIA card 84 accommodated within the card insertion portion 80 of the main body 12 is prevented from being removed from the exterior by the preventing member 88. In addition, the preventing member 88 is covered by the keyboard 22 and is prevented from being removed from the exterior. Further, the keyboard 22 is maintained in a closed state by the movable member 62 so as to be prevented from being opened. Consequently, arbitrary removal of a PCMCIA card 84 accommodated within the card insertion portion 80 and the devices such as the HDD pack 34 or the FDD pack 38 accommodated within the main body 12 can be prevented. Such prevention can be realized in a simple structure and at a low cost. Moreover, even if a plurality of devices such as the HDD pack 34 are accommodated within the main body 12, a single movable member 62 can prevent each device from being arbitrarily removed from the main body 12. Similarly, even if a plurality of PCMCIA cards 84 are accommodated within the card insertion portions 80, a single preventing member 88 can prevent each PCMCIA card 84 from being arbitrarily removed from the card insertion portions 80.

While the present embodiment employs a notebook-type personal computer as an example of information processing apparatus, the present invention is not limited to the same and may be applied to a desktop-type personal computer or various other types of information processing apparatuses.

## Claims

1. An information processing apparatus comprising:
a main body in which a device for processing information is accommodated so as to be installable and removable via an opening;
a preventing member freely mountable to and removable from said main body, said preventing member preventing said device from being removed from said opening for a device when said preventing member is mounted to said main body; and
means for preventing removal of said preventing member from said main body.

2. An information processing apparatus according to Claim 1, wherein the preventing member removal preventing means has: a cover mounted to said main body so as to be freely opened and closed, said cover preventing removal of said preventing member from said main body when said cover is closed; and
a movable member mounted to said main body, said movable member being movable between a state in which said movable member protrudes from the exterior of said main body and a state in which said movable member is withdrawn into said main body, and in the state in which said movable member is exposed to the exterior from said main body, said movable member prevents the opening of said cover.
